(19) **Europäisches Patentamt / European Patent Office / Office européen des brevets**

(11) **EP 3 462 314 B1**

(12) **FASCICULE DE BREVET EUROPEEN**

(45) Date de publication et mention
de la délivrance du brevet:
**26.08.2020 Bulletin 2020/35**

(51) Int Cl.:
*G06F 9/48* (2006.01) *F02D 41/12* (2006.01)
*F02D 41/22* (2006.01) *F02D 41/26* (2006.01)
*F02D 11/10* (2006.01)

(21) Numéro de dépôt: **18190996.1**

(22) Date de dépôt: **27.08.2018**

(54) **PROCÉDÉ D'EXÉCUTION SÉLECTIVE DE DIVERSES FONCTIONS DE CONTRÔLE D'UN MOTEUR À COMBUSTION INTERNE SELON UN ORDRE DE PRIORITÉ**

**VERFAHREN ZUR SELEKTIVEN AUSFÜHRUNG VERSCHIEDENER KONTROLLFUNKTIONEN EINES VERBRENNUNGSMOTORS NACH EINER PRIORITÄTENORDNUNG**

**SELECTIVE METHOD FOR PERFORMING VARIOUS FUNCTIONS FOR CONTROLLING AN INTERNAL COMBUSTION ENGINE ACCORDING TO AN ORDER OF PRIORITY**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2017 FR 1759046**

(43) Date de publication de la demande:
**03.04.2019 Bulletin 2019/14**

(73) Titulaire: **PSA Automobiles SA
78300 Poissy (FR)**

(72) Inventeurs:
• **MARTINEZ, Jose Luis
92250 La Garenne-Colombes (FR)**
• **CHEMISKY, Jean Pierre
92150 Suresnes (FR)**
• **MATE RODRIGUEZ, Maria Jose
95870 Bezons (FR)**
• **TRUTET, Arnaud
78800 Houilles (FR)**

(56) Documents cités:
**EP-A2- 2 042 718        JP-A- 2008 163 851
US-A1- 2007 083 321   US-A1- 2014 277 998
US-A1- 2016 251 013**

**Description**

L'invention porte sur un procédé d'exécution sélective de diverses fonctions de contrôle d'un moteur à combustion interne requérant une coupure d'une injection de carburant au moteur pour leur exécution dans un véhicule automobile, l'exécution d'au moins deux des diverses fonctions de contrôle pouvant être requises simultanément.

Une coupure d'injection peut avoir lieu lors d'un lever de pied du conducteur sur la pédale d'accélérateur ou peut être automatiquement initiée par une fonctionnalité prévue dans le véhicule automobile.

Comme fonctionnalités, il pourra être cité l'arrêt du moteur à combustion interne pour une propulsion du véhicule automobile par un moteur autre qu'un moteur à combustion interne, par exemple un moteur électrique comme c'est le cas dans un véhicule automobile hybride. Une autre fonctionnalité concerne un mode automatique de roulage en roue libre équipant le véhicule automobile. Ceci n'est pas limitatif.

Le mode de roulage en roue libre automatisé est une fonction qui permet à un véhicule automobile lancé de continuer son roulage tout en découplant une transmission aux roues motrices du véhicule du moteur à combustion interne du véhicule. La transmission comprend classiquement une boîte de vitesses et son embrayage. Le moteur n'effectuant plus d'entraînement peut alors être mis au ralenti ou à l'arrêt. Cette fonction est activée lorsque la vitesse du véhicule est suffisante, par exemple pour un profil extra-urbain et notamment un profil de route descendante.

Par exemple, le document WO-A-2005/84995 décrit un procédé et un système permettant le roulage en roue libre d'un véhicule, le véhicule étant équipé de moyens de ralentissement, d'un moteur, d'une roue entraînée par le moteur via une boîte de vitesses à étages automatisé, un accélérateur pour le contrôle du couple moteur et une unité de commande.

L'unité de commande est agencée, lors de l'activation de la fonction de roulage en roue libre et en présence d'un signal d'entrée indiquant qu'une limite de vitesse prédéterminée du véhicule est dépassée, pour la désactivation automatique de la fonction de roulage en roue libre et ralentir le véhicule avec les moyens de ralentissement.

L'unité de commande est aussi agencée pour la réactivation de la fonction de roulage en roue libre en présence d'un signal d'entrée indiquant que la vitesse du véhicule a diminué pour être proche de la limite de vitesse prédéterminée du véhicule.

Certaines fonctions du moteur à combustion interne telles que des diagnostics après-vente, des diagnostics de sûreté de fonctionnement et des fonctions d'agrément utilisent les phases de coupures d'injection, comme lors des phases de levers de pied du conducteur de l'accélérateur pour couvrir les besoins d'exécution et obtenir un plein potentiel de performance du moteur.

L'ajout de nouvelles situations de vie telles que le mode de roulage en roue libre automatique ou celles occasionnées par des véhicules hybrides font que les occurrences de coupures d'injection de carburant, sont nettement diminuées. En conséquence les fonctions de contrôle requérant de telles coupures d'injection pour leur exécution, n'arriveront pas à avoir leur plein potentiel de performance.

Ce problème n'a cependant pas été reconnu par l'état de la technique et aucun document n'est relatif à l'optimisation de l'exécution de fonctions de contrôles se déroulant spécifiquement lors de coupures d'injection de carburant au moteur, coupures d'injection qui peuvent être de moins en moins nombreuses dans les modes de roulage précédemment cités.

On connait également du document EP2042718A2 un procédé d'exécution sélective de diverses fonctions de contrôle d'un moteur à combustion interne requérant chacune une coupure d'une injection de carburant au moteur pour leur exécution dans un véhicule automobile, mais ne permet pas plus l'optimisation de l'exécution de fonctions de contrôles se déroulant spécifiquement lors de coupures d'injection de carburant au moteur.

C'est pourquoi, le problème à la base de la présente invention a trait à l'exécution de fonctions de contrôle pendant de telles coupures d'injection afin que les fonctions de contrôle les plus importantes du moteur à combustion interne bénéficient de suffisamment d'occurrences d'exécution sans pourtant impacter la conduite du véhicule.

Pour atteindre cet objectif, il est prévu selon l'invention, un procédé d'exécution sélective de diverses fonctions de contrôle d'un moteur à combustion interne requérant chacune une coupure d'une injection de carburant au moteur pour leur exécution dans un véhicule automobile, l'exécution d'au moins deux des diverses fonctions de contrôle pouvant être requises simultanément, caractérisé en ce que :

- on détermine une fenêtre kilométrique courante à parcourir,
- on détermine une fréquence cible d'exécution pour chaque fonction de contrôle,
- on détermine pour chaque fonction de contrôle, une fréquence moyenne d'exécution sur l'ensemble des fenêtres parcourues,
- à partir de leur fréquence cible, et de leur fréquence moyenne d'exécution, on détermine, pour chaque fonction de contrôle, une fréquence requise d'exécution pour la fenêtre courante à parcourir, pour respecter la fréquence cible,
- on détermine tout au long du parcours de la fenêtre courante, pour chaque fonction de contrôle, leur fréquence courante d'exécution, à partir de la distance parcourue dans la fenêtre courante et du nombre d'exécution de la fonction de contrôle pendant le parcours de cette distance,

- on compare, pour chaque fonction de contrôle, leur fréquence courante d'exécution à leur fréquence requise,
- on détermine, pour chaque fonction de contrôle, un besoin d'exécution de la fonction de contrôle lorsque leur fréquence courante d'exécution est inférieure à leur fréquence requise,
- entre fonctions de contrôle en besoin d'exécution, leur exécution se fait selon une hiérarchisation préétablie des fonctions de contrôle.

Comme l'occurrence des coupures d'injection de carburant à un moteur à combustion interne, obtenues par des levers de pied de l'accélérateur, décroît avec de nouvelles fonctionnalités équipant un véhicule automobile, notamment la présence d'un moteur électrique en plus du moteur à combustion interne dans un véhicule automobile hybride ou un mode roue libre automatique, il a été nécessaire de rationaliser le déclenchement d'exécutions des fonctions de contrôle nécessitant une coupure d'injection de carburant dans le moteur. Le procédé selon la présente invention permet d'analyser et de hiérarchiser les besoins en fonctions de contrôle nécessitant des coupures d'injection de carburant.

La demande d'exécution d'une telle fonction de contrôle ne sera effectuée que quand le besoin en cette fonction de contrôle est existant, afin d'impacter au minimum la conduite du véhicule automobile, tout en garantissant le plein potentiel des fonctions de contrôle. L'ordre de priorité permet d'exécuter d'abord les fonctions de contrôle les plus importantes.

Diverses caractéristiques supplémentaires peuvent être prévues, seules ou en combinaisons :

Avantageusement, la hiérarchisation préétablie des fonctions de contrôle concerne dans un ordre décroissant de priorité : des diagnostics après-vente, des diagnostics de sûreté de fonctionnement du moteur et des fonctions d'agrément.

Avantageusement, au moins deux fonctions de contrôle peuvent être exécutées simultanément quand les exécutions desdites au moins deux fonctions de contrôle ne sont pas incompatibles ou n'interfèrent pas entre elles et, quand les exécutions desdites au moins deux fonctions sont incompatibles ou interfèrent entre elles, la ou les fonctions de contrôle desdites au moins deux fonctions de contrôle présentent un ordre ou des ordres de priorité inférieurs sont suspendues. L'ordre de priorité peut alors être modifié, une fonction de contrôle compatible avec la fonction de priorité la plus haute pouvant passer avant une fonction de priorité intermédiaire mais incompatible avec la fonction de priorité la plus haute.

Avantageusement, il est effectué une réactualisation des fenêtres kilométriques à intervalles réguliers prédéterminés. L'historique des périodicités de chaque fonction de contrôle est alors réactualisé et correspond le plus possible à la périodicité actuelle.

Avantageusement, la réactualisation se fait lors de roulages successifs pendant toute une vie du véhicule.

Avantageusement, un besoin d'exécution d'une fonction de contrôle est maintenu tant que la fonction de contrôle n'a pas couvert son besoin. Une fonction de contrôle repoussée du fait d'un ordre de priorité faible sera alors exécutée bien qu'ayant été retardée.

L'invention concerne aussi un groupe motopropulseur comprenant un moteur à combustion interne et une unité de contrôle moteur assurant une exécution et un suivi de fonctions de contrôle du moteur, caractérisé en ce que l'unité de contrôle moteur comprend les moyens d'acquisition, de traitement par instructions logicielles stockées dans une mémoire ainsi que les moyens de commande requis à mise en oeuvre d'un procédé selon l'une quelconque des variantes précédemment décrites.

En cas de besoin d'exécution d'une fonction de contrôle, l'unité de contrôle moteur communique au groupe motopropulseur le besoin de s'établir dans une configuration adaptée à la fonction de contrôle. L'unité de contrôle moteur continue avec sa demande de configuration tant qu'un ou des besoins en exécution de fonctions de contrôle spécifiques prédéterminées ne sont pas satisfaits. La réponse positive à une demande de configuration du moteur pour l'exécution d'une ou de fonctions de contrôle spécifiques n'est effective que quand l'unité de contrôle moteur estime qu'il va impacter le moins possible la conduite du véhicule.

L'invention concerne aussi un véhicule automobile, caractérisé en ce qu'il comprend un tel groupe motopropulseur.

Avantageusement, le véhicule automobile est équipé d'un système automatique de coupure d'injection de carburant au moteur à combustion interne.

Avantageusement, le véhicule automobile est un véhicule automobile hybride, un véhicule possédant un mode en roulage roue libre automatisé et/ou un véhicule équipé d'un système d'arrêt et de redémarrage automatiques du moteur à combustion interne.

D'autres caractéristiques, buts et avantages de la présente invention apparaîtront à la lecture de la description détaillée qui va suivre et au regard du dessin annexé donné à titre d'exemple non limitatif et sur lequel :

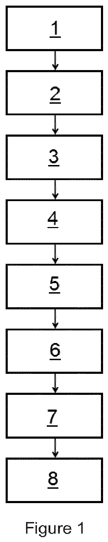

- la figure 1 est une représentation schématique d'un logigramme détaillant les étapes du procédé d'exécution sélective de diverses fonctions de contrôle d'un moteur à combustion interne requérant une coupure d'une injection de carburant au moteur pour leur exécution, ce procédé étant conforme à la présente invention.

En se référant à la figure 1, la présente invention concerne un procédé d'exécution sélective de diverses fonctions de contrôle d'un moteur à combustion interne, par exemple un moteur à combustion interne à allumage commandé ou à allumage par compression requérant une coupure d'une injection de carburant au moteur pour leur exécution dans un véhicule automobile. La coupure d'une injection de carburant peut se faire automatiquement ou lors d'un lever de pied du conducteur de la pédale d'accélérateur.

Il est en effet courant que l'exécution de plusieurs des diverses fonctions de contrôle puisse être requise simultanément. Or, ceci pose un problème du fait d'une diminution des occurrences de coupures d'injection sur les véhicules automobiles dotés de systèmes spécifiques réduisant drastiquement ces occurrences.

C'est le cas par exemple quand le véhicule automobile est équipé d'un système automatique de coupure d'injection de carburant au moteur à combustion interne. Le véhicule automobile peut être un véhicule automobile hybride, un véhicule possédant un mode en roulage roue libre automatisé et/ou un véhicule équipé d'un système d'arrêt et de redémarrage automatiques du moteur à combustion interne. Le véhicule automobile peut comprendre ces trois spécificités, deux d'entre elles ou une seule d'entre elles.

Selon la présente invention, il est déterminé à la référence 1 de la figure 1 une fenêtre kilométrique courante à parcourir pour l'exécution des fonctions de contrôle. Cette fenêtre est avantageusement kilométrique. Par exemple, la fenêtre kilométrique est de 20 kilomètres.

Il est déterminé (référence 2) une fréquence cible, $frq_{cible}$, pour chacune des fonctions de contrôle. Cette fréquence est celle qui est souhaitée pour chaque fonction de contrôle spécifique. Cette fréquence cible peut être calibrable et est de préférence donnée par une cartographie fonction par exemple de de la distance totale parcourue par le véhicule automobile. La fréquence cible peut être adaptée selon le véhicule et l'historique des occurrences d'exécutions des fonctions de contrôle.

Ensuite, il est calculé (référence 3), pour chaque fonction de contrôle, une fréquence totale d'exécutions de la fonction de contrôle pour l'ensemble des fenêtres parcourues, afin de prendre en compte toutes les exécutions de fonctions de contrôle effectuées sur l'ensemble des fenêtres parcourues.

Pour le calcul de la fréquence moyenne d'exécutions d'une fonction de contrôle, on peut utiliser une moyenne glissante définie par la relation générale :

$$\overline{frq_N} = \left(\frac{1}{N}.frq_N + \frac{N-1}{N}.\overline{frq_{N-1}}\right) \qquad (1)$$

Avec, N la fenêtre parcourue,
$frq_N$, la fréquence dans la fenêtre N,
$\overline{frq_N}$, la moyenne glissante sur l'ensemble des N fenêtres parcourues, et
$\overline{frq_{N-1}}$, la moyenne glissante sur l'ensemble des N-1 fenêtres précédentes parcourues.

Ce calcul est fait une fois par fenêtre, à la fin de la dernière fenêtre parcourue N.

On souhaite ainsi qu'à la fin de la fenêtre courante à parcourir, la fréquence courante, $Frq_{fc\_cour}$, d'une fonction de contrôle, fc, soit égale ou supérieure à sa fréquence requise, $frq_{fc\_requise}$, soit :

$$Frq_{fc\_cour} \geq frq_{requise_{fc}} \qquad (2)$$

A cet effet, pour chaque fonction de contrôle, fc, à partir de leur fréquence cible, $frq_{fc\_cible}$, et de leur fréquence moyenne d'exécutions sur l'ensemble des fenêtres parcourues, $\overline{frq_{N_{fc}}}$, on détermine (référence 4 sur la figure 1) quelle doit être la fréquence requise, $frq_{requise_{fc}}$, sur la totalité de la fenêtre courante à parcourir pour respecter la fréquence cible $frq_{fc\_cible}$.

A partir de la relation (1), cette fréquence requise d'exécution, $frq_{requise_{fc}}$, pour la fenêtre courante à parcourir s'écrit :

$$frq_{requise_{fc}} = (N+1).frq_{fc\_cible} - N.\overline{frq_{N_{fc}}} \qquad (3)$$

Avec $\overline{frq_{N_{fc}}}$, la moyenne glissante sur l'ensemble des N fenêtres parcourues, $frq_{fc\_cible}$, la fréquence cible d'exécution de la fonction de contrôle, fc.

Ensuite, lorsque le véhicule parcourt effectivement la fenêtre courante, on détermine (référence 5) tout au long du parcours de cette fenêtre courante, pour chaque fonction de contrôle, fc, sa fréquence courante d'exécutions de la fonction de contrôle, $Frq_{fc\_cour}$. Dans le cas d'une fenêtre kilométrique, cette fréquence courante d'exécutions, $Frq_{fc\_cour}$, est obtenue à instant donné t de parcours de la fenêtre courante par la relation :

$$Frq_{fc\_cour} = \frac{Nbre\_exec}{D} \qquad (4)$$

Avec Nbre_exec, le nombre d'exécution de la fonction de contrôle dans la fenêtre courante à l'instant t et D la distance parcourue dans la fenêtre courant à l'instant t. Autrement dit, lorsqu'elle est calculée, la fréquence courante d'exécutions de recalage, $Frq_{cour}$, est obtenue à partir de la distance D déjà parcourue dans la fenêtre courante et du nombre de recalage, Nbre_Recal, effectués pendant le parcours de cette distance D. Cette fréquence évolue donc tout au long du parcours de la fenêtre courante, en fonction de l'avancée de la distance D et de la ou des exécutions effectuées. Le but étant qu'à la fin du parcours de la fenêtre courante, la fréquence courante d'exécutions, $Frq_{fc\_cour}$ corresponde au minimum à la fréquence requise, $frq_{requisefc}$.

Ainsi, il peut être connu la périodicité de chaque fonction de contrôle. Il est ainsi établi un historique d'occurrences pour chaque fonction de contrôle.

On compare ensuite pour chaque fonction de contrôle, pendant le parcours de la fenêtre courante (référence 6), leur fréquence courante d'exécutions , $Frq_{fc\_cour}$, à leur fréquence requise, $frq_{requisefc}$.

Il est ainsi déterminé à la référence 7, pour chaque fonction de contrôle, un besoin d'exécution ou non de cette fonction de contrôle. Ce besoin est identifié quand la fréquence courante d'exécution, $Frq_{cour}$ est inférieure à la fréquence requise, $frq_{requisefc}$.

Plusieurs fonctions de contrôle peuvent être simultanément en besoin d'exécution. Entre fonctions de contrôle en besoin d'exécution, l'exécution des fonctions de contrôle se fait selon une hiérarchisation préétablie des fonctions de contrôle (référence 8 sur la figure 1)

Il est alors procédé à l'envoi de la situation de vie priorisée vers le groupe moto propulseur qui permettra l'activation de la fonction de contrôle prioritaire ou des fonctions de contrôle prioritaires si ces fonctions de contrôle ne sont pas incompatibles et peuvent se dérouler simultanément.

L'ajout de nouvelles situations de vie telles que le mode de roulage en roue libre automatique, aussi dénommé « Coasting » en langue anglo-saxonne ou fréquentes pour des véhicules hybrides, font que les occurrences de pied levé sont nettement diminuées. En conséquence les fonctions nécessitantes de ces situations de vie n'arriveront pas à être exécutées complètement.

Ainsi, selon l'invention, un ordre de priorité a été développé afin d'analyser les besoins de diverses fonctions de contrôle, hiérarchiser les besoins entre ces diverses fonctions et informer le groupe motopropulseur du besoin d'exécution d'une ou de plusieurs fonctions de contrôle afin que ces fonctions de contrôle arrivent à obtenir suffisamment d'occurrences pour être complètement exécutées sans pourtant impacter le fonctionnement du moteur et la conduite du véhicule.

La hiérarchisation préétablie des fonctions de contrôle peut concerner dans un ordre décroissant de priorité : des diagnostics après-vente, des diagnostics de sûreté de fonctionnement du moteur et des fonctions d'agrément.

Comme précédemment mentionné, au moins deux fonctions de contrôle peuvent être exécutées simultanément quand les exécutions desdites au moins deux fonctions de contrôle ne sont pas incompatibles ou n'interfèrent pas entre elles.

Par contre, quand les exécutions desdites au moins deux fonctions sont incompatibles ou interfèrent entre elles, la ou les fonctions de contrôle desdites au moins deux fonctions de contrôle présentant un ordre ou des ordres de priorité inférieurs peuvent être suspendues. Il est possible de remplacer la ou les fonctions de contrôle incompatibles avec l'exécution d'une fonction d'ordre de priorité plus élevé par une ou des fonctions de contrôles d'un ordre inférieur mais compatible avec la fonction d'ordre de priorité plus élevé.

Il est effectué une réactualisation, c'est-à-dire qu'à la fin d'une fenêtre en démarre une nouvelle, des fenêtres kilométriques à intervalles réguliers prédéterminés, ceci pendant toute la vie du véhicule. La réactualisation se fait lors de roulages successifs pendant toute une vie du véhicule.

Afin d'affiner le procédé, on peut prévoir que les seules exécutions de fonction de contrôle prises en compte pour le calcul des fréquences sont des exécutions considérées comme complètement exécutées. Une exécution peut être considérée comme complètement exécutée si la durée d'exécution a été supérieure à une durée seuil. Le temps moyen d'une exécution d'une fonction de contrôle peut être estimé et est sensiblement reproductible. Pour chaque fonction de contrôle, la durée d'exécution seuil peut être une durée minimale déterminée par expérience.

On peut également prévoir qu'un besoin d'exécution d'une fonction de contrôle est maintenu tant que la fonction de contrôle n'a pas été complètement exécutée.

L'invention concerne aussi un groupe motopropulseur comprenant un moteur à combustion interne et une unité de contrôle moteur assurant une exécution et un suivi de fonctions de contrôle du moteur.

Selon l'invention, pour la mise en oeuvre du procédé précédemment décrit, l'unité de contrôle moteur comprend les moyens d'acquisition, de traitement par instructions logicielles stockées dans une mémoire ainsi que les moyens de commande requis à mise en oeuvre du procédé précédemment décrit.

On y trouvera par exemple des moyens de détermination d'une fenêtre kilométrique pour l'exécution des fonctions de contrôle, des moyens de détermination et de mémorisation des fréquences précédemment décrites (fréquence cible, fréquence totale d'exécution des fonctions de contrôle,...), des moyens de comparaison des fréquences courante d'exécutions des fonctions de contrôle à leur fréquence requise, et des moyens d'émission d'un besoin d'exécution activation en fonction du résultat de cette comparaison, des moyens de hiérarchisation des fonctions de contrôle à exécuter.

S'il y a besoin d'exécution d'une fonction de contrôle, le contrôle moteur peut communiquer au groupe motopropulseur le besoin de s'établir dans une configuration adaptée à la fonction de contrôle.

**Revendications**

1. Procédé d'exécution sélective de diverses fonctions de contrôle d'un moteur à combustion interne requérant chacune une coupure d'une injection de carburant au moteur pour leur exécution dans un véhicule automobile, l'exécution d'au moins deux des diverses fonctions de contrôle pouvant être requises simultanément, **caractérisé en ce que** :

   - on détermine (1) une fenêtre kilométrique courante à parcourir,
   - on détermine (2) une fréquence cible d'exécution ($frq_{fc\_cible}$) pour chaque fonction de contrôle,
   - on détermine (3), pour chaque fonction de contrôle, une fréquence moyenne d'exécution sur l'ensemble des fenêtres parcourues ($\overline{frq_{N\overline{fc}}}$),
   - à partir de leur fréquence cible ($frq_{fc\_cible}$), et de leur fréquence moyenne d'exécution ($\overline{frq_{N\overline{fc}}}$), on détermine (4), pour chaque fonction de contrôle, une fréquence requise d'exécution pour la fenêtre courante à parcourir ($frq_{requisefc}$), pour respecter la fréquence cible ($frq_{cible}$),
   - on détermine (5) tout au long du parcours de la fenêtre courante, pour chaque fonction de contrôle, leur fréquence courante d'exécution ($Frq_{fc\_cour}$), à partir de la distance parcourue dans la fenêtre courante et du nombre d'exécution de la fonction de contrôle pendant le parcours de cette distance,
   - on compare (6), pour chaque fonction de contrôle, leur fréquence courante d'exécution ($Frq_{fc\_cour}$) à leur fréquence requise ($frq_{requisefc}$),
   - on détermine (7), pour chaque fonction de contrôle, un besoin d'exécution de la fonction de contrôle lorsque leur fréquence courante d'exécution ($Frq_{fc\_cour}$) est inférieure à leur fréquence requise ($frq_{requisefc}$),
   - entre fonctions de contrôle en besoin d'exécution, leur exécution se fait selon une hiérarchisation (8) préétablie des fonctions de contrôle.

2. Procédé selon la revendication 1, dans lequel la hiérarchisation préétablie (8) des fonctions de contrôle concerne dans un ordre décroissant de priorité : des diagnostics après-vente, des diagnostics de sûreté de fonctionnement du moteur et des fonctions d'agrément.

3. Procédé selon la revendication 2, dans lequel au moins deux fonctions de contrôle peuvent être exécutées simultanément quand les exécutions desdites au moins deux fonctions de contrôle ne sont pas incompatibles ou n'interfèrent pas entre elles et, quand les exécutions desdites au moins deux fonctions sont incompatibles ou interfèrent entre elles, la ou les fonctions de contrôle desdites au moins deux fonctions de contrôle présentant un ordre ou des ordres de priorité inférieurs sont suspendues.

4. Procédé selon l'une quelconque des revendications 1 à 3, dans lequel il est effectué une réactualisation des fenêtres kilométriques à intervalles réguliers prédéterminés.

5. Procédé selon la revendication 4, dans lequel la réactualisation se fait lors de roulages successifs pendant toute une vie du véhicule.

6. Procédé selon l'une quelconque des revendications précédentes, dans lequel un besoin d'exécution d'une fonction de contrôle est maintenu tant que la fonction de contrôle n'a pas couvert son besoin.

7. Groupe motopropulseur comprenant un moteur à combustion interne et une unité de contrôle moteur assurant une exécution et un suivi de fonctions de contrôle du moteur, **caractérisé en ce que** l'unité de contrôle moteur comprend les moyens d'acquisition, de traitement par instructions logicielles stockées dans une mémoire ainsi que les moyens de commande requis à mise en oeuvre d'un procédé selon l'une quelconque des revendications précédentes.

8. Véhicule automobile, **caractérisé en ce qu'**il comprend un groupe motopropulseur selon la revendication 7.

9. Véhicule automobile selon la revendication 8, lequel est équipé d'un système automatique de coupure d'injection de carburant au moteur à combustion interne.

10. Véhicule automobile selon la revendication 9, lequel est un véhicule automobile hybride, un véhicule possédant un mode en roulage roue libre automatisé et/ou un véhicule équipé d'un système d'arrêt et de redémarrage automatiques du moteur à combustion interne.

**Patentansprüche**

1. Verfahren zur selektiven Ausführung verschiedener Steuerfunktionen eines Verbrennungsmotors, die jeweils eine Unterbrechung der Kraftstoffeinspritzung in den Motor für ihre Ausführung in einem Kraftfahrzeug erfordern, die Ausführung von mindestens zwei der verschiedenen Steuerfunktionen kann gleichzeitig benötigt werden, **gekennzeichnet durch**:

   - wir bestimmen (1) ein aktuelles Kilometerfenster, das abgedeckt werden soll.
   - wir bestimmen (2) eine Zielausführungsfrequenz ($frq_{fc\_cible}$) für jede Steuerfunktion,
   - on wird bestimmt (3), für jede Steuerfunktion eine durchschnittliche Ausführungsfrequenz über alle durchquerten Fenster ($\overline{frq_{Nfc}}$),
   - Aus ihrer Zielfrequenz ($frq_{fc\_cible}$) und ihrer durchschnittlichen Ausführungsfrequenz ($\overline{frq_{Nfc}}$) bestimmen wir (4) für jede Steuerfunktion a erforderliche Ausführungshäufigkeit für das aktuelle Fenster zum Durchsuchen ($frq_{requisefc}$), um die Zielfrequenz zu respektieren ($frq_{cible}$),
   - Wir bestimmen (5) im Verlauf des aktuellen Fensters für jede Steuerfunktion ihre aktuelle Ausführungshäufigkeit ($Frq_{fc\_cour}$) aus der im aktuellen Fenster zurückgelegten Strecke und der Anzahl Ausführung der Steuerfunktion im Verlauf dieser Strecke,
   - wir vergleichen (6) für jede Steuerfunktion ihre aktuelle Ausführungshäufigkeit ($Frq_{fc\_cour}$) mit ihrer erforderlichen Häufigkeit ($frq_{requisefc}$),
   - Wir bestimmen (7) für jede Steuerfunktion, dass die Steuerfunktion ausgeführt werden muss, wenn ihre aktuelle Ausführungsfrequenz ($Frq_{fc\_cour}$) niedriger ist als ihre erforderliche Frequenz ($frq_{requisefc}$),
   - zwischen Steuerfunktionen, die ausgeführt werden müssen, erfolgt ihre Ausführung gemäß einer vorher festgelegten Hierarchie (8) von Steuerfunktionen.

2. Verfahren nach Anspruch 1, in dem sich die vorgegebene Hierarchie (8) der Steuerfunktionen in absteigender Reihenfolge der Priorität bezieht: After-Sales-Diagnose, Diagnose der Motorbetriebssicherheit und Genehmigungsfunktionen.

3. Verfahren nach Anspruch 2, bei dem mindestens zwei Steuerfunktionen gleichzeitig ausgeführt werden können, wenn die Ausführungen der mindestens zwei Steuerfunktionen nicht inkompatibel sind oder sich nicht gegenseitig stören, und wenn die Ausführungen der mindestens zwei Funktionen sind inkompatibel oder stören sich gegenseitig, die Steuerfunktion oder Funktionen der mindestens zwei Steuerfunktionen mit einer Reihenfolge oder Aufträgen mit niedrigerer Priorität sind ausgesetzt.

4. Verfahren nach einem der Ansprüche 1 bis 3, wobei eine Aktualisierung der Kilometerfenster in vorbestimmten regelmäßigen Intervallen durchgeführt wird.

5. Verfahren nach Anspruch 4, bei dem die Aktualisierung während aufeinanderfolgenden Rollens für eine Lebensdauer des Fahrzeugs durchgeführt wird.

6. Verfahren nach einem der vorhergehenden Ansprüche, bei dem ein Bedarf für die Ausführung einer Steuerfunktion aufrechterhalten wird, bis die Steuerfunktion ihren Bedarf gedeckt hat.

7. Antriebsstrang der einen Verbrennungsmotor und ein Motorsteuergerät umfasst und die Ausführung und Überwachung von Motorsteuerfunktionen sicherstellt, **dadurch gekennzeichnet, dass** das Motorsteuergerät die Mittel zur Erfassung und Verarbeitung durch Anweisungen umfasst in einem Speicher gespeicherte Software sowie die Steuermittel, die erforderlich sind, um ein Verfahren gemäß einem der vorhergehenden Ansprüche zu implementieren.

8. Kraftfahrzeug, **dadurch gekennzeichnet, dass** es einen Antriebsstrang nach Anspruch 7 umfasst.

9. Kraftfahrzeug nach Anspruch 8, das mit einem automatischen Kraftstoffeinspritz-Abschaltsystem für den Verbrennungsmotor ausgestattet ist.

10. Kraftfahrzeug nach Anspruch 9, bei dem es sich um ein Hybridfahrzeug handelt, ein Fahrzeug mit einem automatisierten Ausrollmodus und / oder ein Fahrzeug, das mit einem automatischen Stopp- und Neustartsystem des Verbrennungsmotors ausgestattet ist.

**Claims**

1. Method for the selective execution of various control functions of an internal combustion engine each requiring a cut of a fuel injection to the engine for their execution in a motor vehicle, the execution of at least two of the various control functions can be required simultaneously, **characterized in that**:

    - we determine (1) a current kilometer window to cover,
    - we determine (2) a target execution frequency ($frq_{fc\_cible}$) for each control function,
    - we determine (3), for each control function, an average frequency of execution on all the windows browsed ($\overline{frq_{Nfc}}$),
    - from their target frequency ($frq_{fc\_cible}$), and their average execution frequency ($\overline{frq_{Nfc}}$), we determine (4), for each control function, a required execution frequency for the current window to browse ($frq_{requisefc}$), to respect the target frequency ($frq_{cible}$),
    - we determine (5) throughout the course of the current window, for each control function, their current frequency of execution ($Frq_{fc\_cour}$), from the distance traveled in the current window and the number execution of the control function during the course of this distance,
    - we compare (6), for each control function, their current frequency of execution ($Frq_{fc\_cour}$) to their required frequency ($frq_{requisefc}$),
    - we determine (7), for each control function, a need to execute the control function when their current frequency of execution ($Frq_{fc\_cour}$) is lower than their required frequency ($frq_{requisefc}$),
    - between control functions in need of execution, their execution is done according to a pre-established hierarchy (8) of control functions.

2. Method according to claim 1, in which the pre-established hierarchy (8) of the control functions relates, in decreasing order of priority: after-sales diagnostics, diagnostics of engine operating safety and approval functions.

3. Method according to claim 2, in which at least two control functions can be executed simultaneously when the executions of said at least two control functions are not incompatible or do not interfere with each other and, when the executions of said at least two functions are incompatible or interfere with each other, the control function or functions of said at least two control functions having an order or lower priority orders are suspended.

4. Method according to any one of claims 1 to 3, wherein it is carried out an update of the kilometer windows at predetermined regular intervals.

5. Method according to claim 4, in which the updating is done during successive taxiing for a lifetime of the vehicle.

6. Method according to any one of the preceding claims, in which a need for the execution of a control function is maintained until the control function has covered its need.

7. Powertrain comprising an internal combustion engine and an engine control unit ensuring execution and monitoring of engine control functions, **characterized in that** the engine control unit comprises the means of acquisition, processing by instructions software stored in a memory as well as the control means required to implement a method according to any one of the preceding claims.

8. Motor vehicle, **characterized in that** it comprises a powertrain according to claim 7.

9. Motor vehicle according to claim 8, which is equipped with an automatic fuel injection cut-off system to the internal combustion engine.

10. Motor vehicle according to claim 9, which is a hybrid motor vehicle, a vehicle having an automated coasting mode and / or a vehicle equipped with an automatic stopping and restarting system of the internal combustion engine.

Figure 1

**EP 3 462 314 B1**

**RÉFÉRENCES CITÉES DANS LA DESCRIPTION**

**Documents brevets cités dans la description**

- WO 200584995 A

- EP 2042718 A2